# FASCICULE DE BREVET EUROPEEN

(11) **EP 0 645 553 B1**
(45) Date de publication et mention de la délivrance du brevet: **16.07.1997**
(21) Numéro de dépôt: 94420253.0
(22) Date de dépôt: 22.09.1994
(51) Int. Cl.: F16F 3/08, F16F 1/36

(54) **Structure composite perfectionnée pour l'amortissement des vibrations, comprenant au moins deux plaques superposées en matériau élastique**
Verbesserte Verbundstruktur zum Dämpfen von Schwingungen mit mindestens zwei übereinander angeordneten Platten aus elastischem Material
Improved composite structure for damping vibrations comprising at least two superposed plates of elastic material

(30) Priorité: 23.09.1993 FR 9311540
(43) Date de publication de la demande: 29.03.1995
(73) Titulaire: FABERT SA, F-69960 Corbas (FR)
(72) Inventeur: Levy, Jean-Claude, F-69003 Lyon (FR)
(74) Mandataire: Laurent, Michel

(56) Documents cités:
- EP-A- 0 021 958
- EP-A- 0 084 857
- US-A- 1 345 987
- US-A- 2 301 385
- US-A- 2 914 275
- US-A- 3 311 331

## Description

### Domaine Technique

L'invention concerne une structure composite perfectionnée pour l'amortissement des vibrations, du type comprenant au moins deux plaques superposées en matériau élastique.

### Techniques Antérieures

Dans le document EP-A-0 021 958, on a décrit une structure composite pour l'amortissement des vibrations d'un ensemble vibratoire, par exemple d'une machine, formée d'une structure comprenant deux plaques en des matériaux élastiques de dureté Shore différente. Ces plaques comportent sur leurs faces externes des plots déformables, et sur leurs faces en contact mutuel des cannelures rectilignes de profil complémentaire, les parties en saillie des cannelures d'une face étant emboitées dans les parties en creux correspondantes de l'autre face.

Cette disposition donne de bons résultats, mais ne permet pas toujours de bien neutraliser toutes les vibrations, notamment lorsque l'embase de l'ensemble vibratoire est mal positionné sur la structure. Par ailleurs, on sait qu'en pratique, le contrôle des vibrations doit être fait sur un large spectre vibratoire pour tenir compte de la gamme étendue des vibrations émises par les différents ensembles vibratoires. Enfin, cette disposition ne permet pas toujours d'assurer de manière satisfaisante la mise à niveau de l'ensemble vibratoire.

Dans le document FR-A-2 642 490, le Demandeur a décrit un perfectionnement de la structure en question, consistant à intercaler une troisième plaque en sandwich entre deux plaques à cannelures, cette troisième plaque étant réalisée en un matériau souple et résilient. Cette structure présente toutefois les mêmes inconvénients que précédemment.

L'invention pallie ces inconvénients. Elle vise une structure composite perfectionnée pour l'amortissement des vibrations du type en question, facile à fabriquer, prête à l'emploi, assurant un meilleur contrôle des nuisances vibratoires, facilement réutilisable, particulièrement adaptée aux applications domestiques.

### Exposé de l'Invention

Cette structure composite pour l'amortissement des vibrations, du type comprenant au moins deux plaques superposées en matériau élastique, respectivement une plaque de dessous destinée à venir au contact du sol, et une plaque de dessus destinée à recevoir l'ensemble émettant les vibrations à amortir, ces plaques étant en contact mutuel par leurs faces en regard comportant des cannelures rectilignes de profil complémentaire, les parties en saillie d'une plaque étant emboitées dans les parties en creux correspondantes de l'autre plaque, se caractérise en ce que la face externe de la plaque de dessus présente une bordure en relief comportant au niveau de la face supérieure une entaille disposée dans le même plan que cette face externe.

En d'autres termes, l'invention consiste, dans la structure composite du type en question, à ménager sur le bord de la plaque de dessus, une bordure en relief présentant une entaille horizontale.

Avantageusement, en pratique :
- l'entaille est destinée à recevoir une plaque rigide, notamment à parois lisses, sur laquelle vient s'appuyer l'ensemble émettant les vibrations, par exemple par l'intermédiaire d'un pied ; cette plaque rigide permet de mieux répartir la charge de l'ensemble vibratoire, et ainsi d'éviter des effets néfastes d'emporte-pièce ;
- cette plaque rigide présente une partie en creux ou une gorge circulaire, destinée à recevoir et à maintenir une roue fixée à l'extrémité d'un pied de l'ensemble vibratoire ;
- la plaque rigide est en métal, notamment en acier, voire en matière plastique ;
- la plaque rigide présente un orifice dans lequel vient se loger une tige filetée associée à un écrou de réglage pour la mise à niveau de l'ensemble vibratoire ;
- les plaques sont en un matériau élastique de dureté Shore identiques ou différentes, comprise entre 25 et 40, de préférence voisine de 30 ;
- les plaques épousent la forme d'un carré et la bordure caractéristique est disposée sur deux côtés contigus ;
- la face externe de la plaque de dessous destinée à venir en contact du sol, comporte des parties en relief en forme de pyramide tronquée à base rectangulaire, disposées par exemple pour partie suivant des rangées parallèles aux cannelures, et pour partie perpendiculairement à ces cannelures ; dans une autre forme d'exécution, partie de ces reliefs peuvent être disposés suivant un angle déterminé par rapport aux cannelures ;
- la face de dessus présente une pluralité de rainures parallèles disposées en diagonale sur lesquelles repose alors la plaque rigide ;
- la face externe de la plaque de dessus présente en son centre une alvéole en creux, destinée à recevoir la tête de sertissage de la tige filetée.

Dans une version pratique, quatre plaques de forme carrée sont moulées ensemble, et sont reliées par des entretoises, deux plaques de dessus étant disposées sur une diagonale, deux plaques de dessous selon une autre diagonale, les cannelures complémentaires des quatre plaques étant disposées du même côté.

La manière dont l'invention peut être réalisée et les avantages qui en découlent, ressortiront mieux de l'exemple de réalisation qui suit à l'appui des figures annexées.

### Description sommaire des dessins

Les figures 1 à 3 représentent la plaque de dessous montrée respectivement vue de dessus en figure 1, vue de dessous en figure 2 et en coupe en figure 3.

Les figures 4 à 6 représentent la plaque de dessus montrée respectivement vue de dessous en figure 4, vue de dessus en figure 5 et en coupe en figure 6.

La figure 7 représente en vue perspective sommaire une plaque rigide conforme à l'invention.

Les figures 8 à 9 montrent deux dispositions particulières de l'utilisation de cette plaque rigide.

Les figures 10 et 11 montrent respectivement, vu de dessus et vu de dessous, un ensemble de quatre plaques moulées ensemble conformément à l'une des caractéristiques de l'invention.

Les figures 12 et 13 montrent, respectivement vue en coupe et vue de dessus, une autre forme d'exécution de la plaque rigide caractéristique.

### Manières de réaliser l'invention

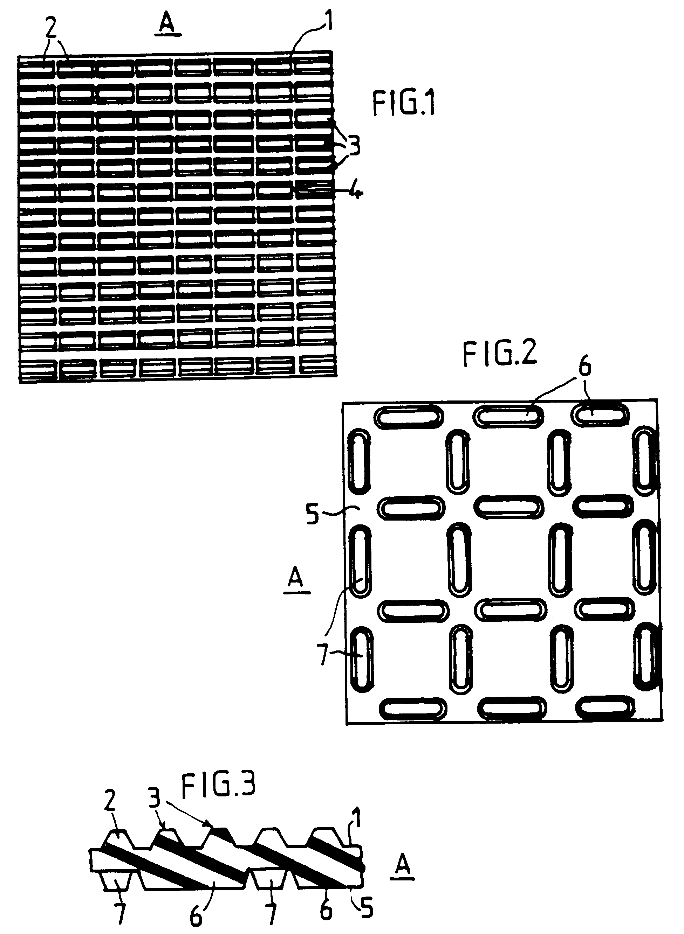

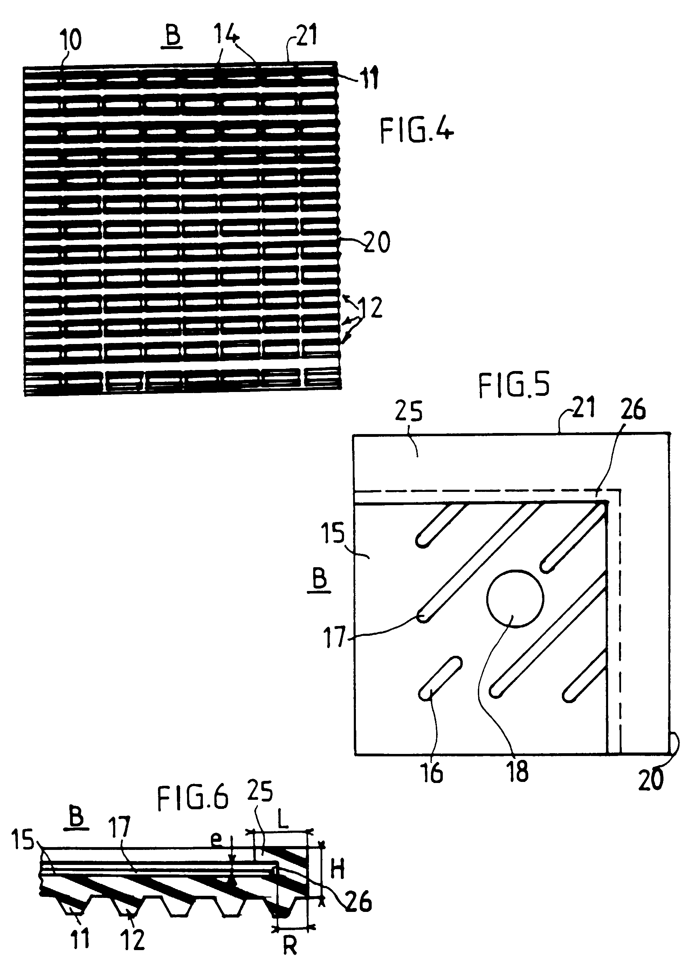

La plaque de dessous (A) (voir figures 1 à 3) comprend de manière connue, sur sa face inférieure (1) destinée à venir au regard des cannelures complémentaires, une pluralité de cannelures parallèles (2,3) rectilignes, de profil tronconique (voir figure 3), régulièrement espacées, régulièrement fendues depuis leur base à intervalles réguliers (4) par des découpes transversales, à l'instar de ce qui est décrit dans le document EP-A-0 021 958 cité dans le préambule. Cette plaque (1) comporte sur son autre face (5) destinée à venir au contact avec le sol, des parties en saillie (6,7) en forme de pyramide tronquée à base rectangulaire, disposées suivant deux rangées, respectivement l'une parallèle aux cannelures (2,3), l'autre perpendiculaire à ces cannelures.

Dans une forme d'exécution pratique, les cannelures (2,3) rectilignes complémentaires interrompues en forme de tronc de pyramide, ont une section de quatre millimètres à leur base, de deux millimètres en haut du tronc de pyramide, pour une hauteur de cinq millimètres. Ces cannelures de dix millimètres de long sont régulièrement espacées de deux millimètres. La plaque (1) proprement dite a une épaisseur d'environ trois millimètres et les saillies (6,7) terminales sont disposées sur les côtés d'un carré d'environ deux centimètres de côté.

La plaque de dessous (A) épouse la forme d'un carré de quatre vingt millimètres de côté. La plaque de dessus caractéristique de l'invention désignée par la référence générale (B), épouse également la forme d'un carré de mêmes dimensions, soit quatre vingt millimètres de côté. La face de dessous (10) de cette plaque de dessus (B), destinée à venir en regard de (1), présente une pluralité de cannelures (11,12) identiques à (2,3 et 4), également régulièrement espacées (14), ayant exactement les mêmes dimensions, de manière à être complémentaires pour pouvoir s'emboiter.

La face de dessus ou externe (15) de cette plaque de dessus (B) (voir figures 4 à 6), présente une pluralité de nervures (16,17) dirigées en diagonale, de forme légèrement tronconique, de quatre millimètres de largeur à la base sur un millimètre de hauteur, pour assurer une bonne assise à la plaque rigide (30).

Selon une première caractéristique de l'invention (figure 5), cette plaque de dessus (B) présente sur deux côtés contigus (20,21), une bordure en relief en forme de L désignée par la référence générale (25), comportant au niveau de la face supérieure (15) une entaille (26) disposée dans le même plan que le plan principal de la face externe (15).

Dans une forme d'exécution pratique, cette entaille définit un entrefer (E) d'environ 1,5 millimètre de hauteur. La bordure caractéristique (25) a une hauteur (H) de cinq millimètres, une longueur (L) de quinze millimètres et une base de raccordement (R) sur la face externe (15) de neuf millimètres.

Dans une forme de réalisation pratique, les plaques (A) et (B) sont réalisées dans un matériau élastique identique, par exemple en caoutchouc EPDM, connu sous la marque "***NEOPRENE***", de dureté Shore 35. Ces plaques (A) et (B) peuvent être également réalisées dans des matériaux de duretés différentes.

Selon une autre caractéristique de l'invention (figure 5), la face externe (15) de la plaque de dessus (B) présente en son centre une alvéole (18) circulaire de quinze millimètres de diamètre et deux millimètres de profondeur. Cette alvéole (18) reçoit la carotte de moulage.

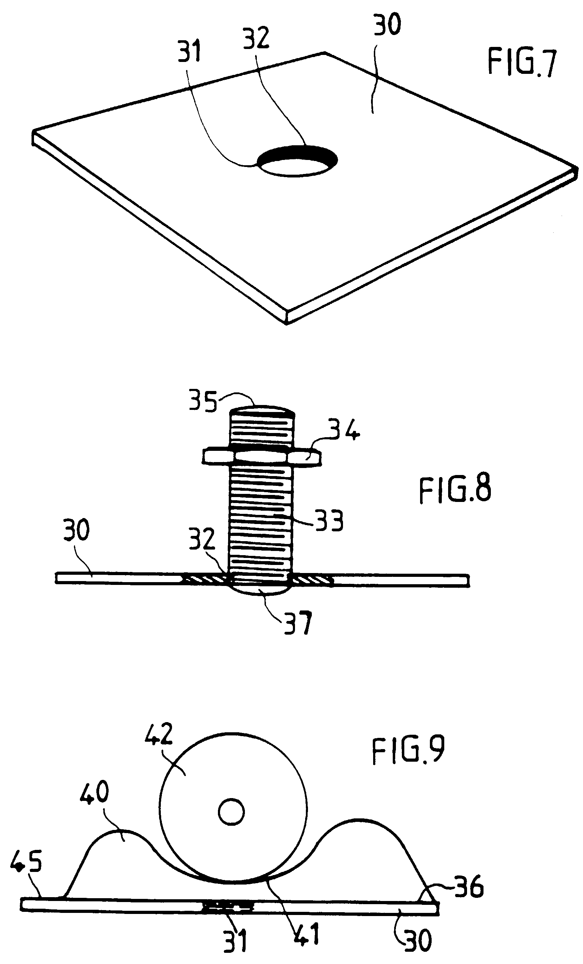

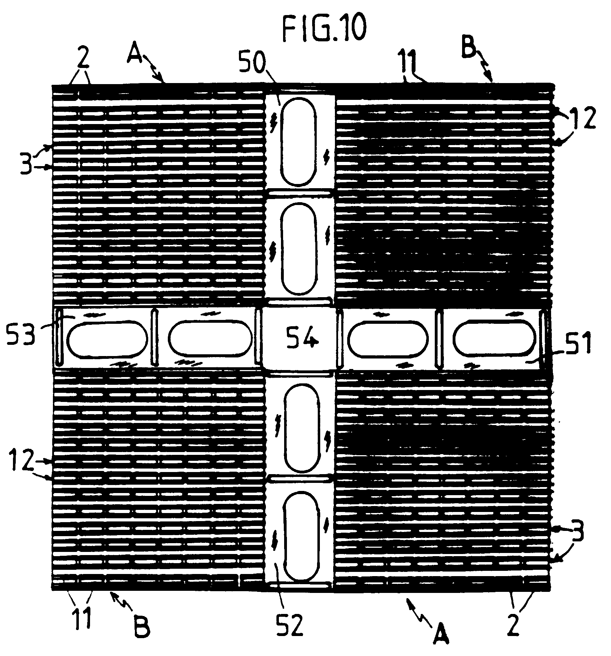

Selon une autre caractéristique de l'invention (voir figure 7), la plaque de dessus (B) est destinée à être associée à une plaque rigide (30), dont les parois sont lisses, par exemple en acier, en tôle, voire en matière plastique rigide, de forme carrée de soixante-cinq millimètres de côté. Cette plaque rigide caractéristique, de répartition de charges ou de réglage de mise à niveau, présente en son centre un orifice traversant (31) fileté (32), pour recevoir (voir figure 8) une tige filetée (33) dont la tête (34) est sertie pour venir se loger dans l'alvéole (18) qui, comme déjà dit, forme en outre carotte d'injection. La tige filetée (33) est associée à un écrou (34), de manière à former un ensemble micrométrique permettant de mettre à niveau l'ensemble vibratoire, et plus précisément en agissant sur les pieds de cet ensemble, qui repose alors sur la tête (35) de la vis filetée.

Dans une autre forme de réalisation montrée à la figure 9, la plaque rigide (30) présente sur sa face supérieure (36) une pièce (40) en relief définissant une gorge (41) destinée à recevoir et à maintenir une roue (42) fixée à l'extrémité d'un pied de l'ensemble vibratoire. Dans cette forme de réalisation, l'extrémité latérale (45) de la plaque (30) est dégagée pour pouvoir s'insérer dans la rainure caractéristique (26).

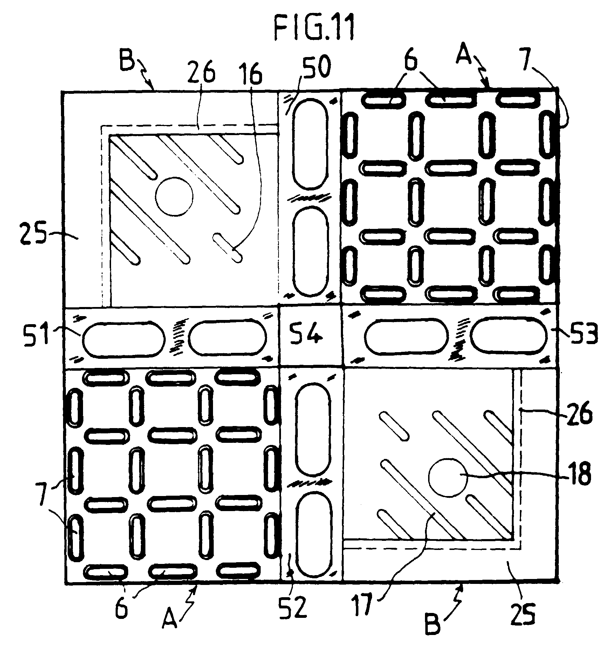

Dans une forme d'exécution pratique montrée aux figures 10 et 11, les plaques (A) et (B) de l'invention sont moulées par groupe de deux paires, en l'occurrence par quatre. Les plaques de dessous (A) sont disposées selon une première diagonale et les plaques de dessus (B) selon l'autre diagonale. Ces plaques, dont les cannelures parallèles rectilignes sont toutes disposées du même côté parallèlement entre elles, sont reliées entre elles par des entretoises (50,51,52,53) venues de moulage, ménageant au centre (54) une portion vide.

Cette forme de présentation permet d'offrir à la vente le produit sous forme de blister prêt à l'emploi. En effet, l'utilisateur, par une simple découpe des bords de chaque plaque, peut aisément détacher les entretoises et ainsi obtenir deux paires de plaques (A) et (B) prêtes à l'emploi. Selon le problème auquel il est confronté, l'utilisateur peut insérer une plaque rigide (30), éventuellement avec sa tige filetée (figure 8), si son problème est de mettre l'ensemble vibratoire à niveau, ou avec la partie en gorge (40) (figure 9) si son problème est d'immobiliser un ensemble monté sur roulettes.

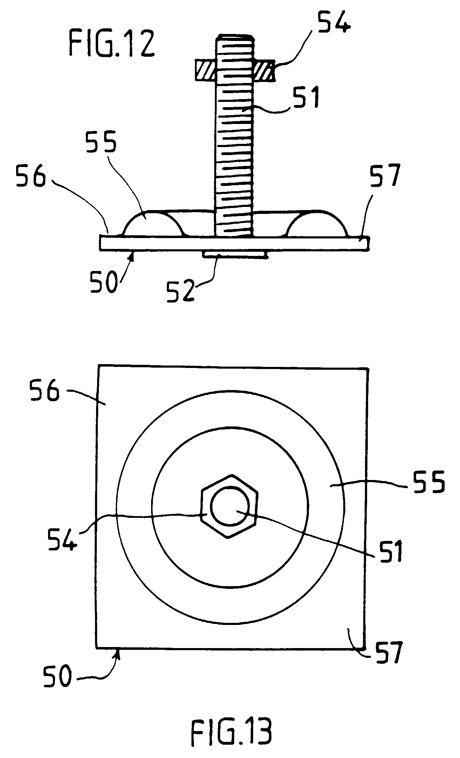

La plaque rigide (50) montrée aux figures 12 et 13 permet indistinctement de recevoir au centre une vis filetée (51) avec sa tête sertie (52) et une couronne circulaire en relief (55) pour bloquer une roulette, tout en ménageant des bords libres (56,57) pour être insérés dans l'entaille concentrique (26). Dans une forme pratique, cette plaque (50) en matière plastique rigide moulée monobloc, épouse la forme d'un carré de soixante cinq millimètres de côté, avec un orifice central horizontal (54) régulier et une couronne circulaire (55) de trente cinq millimètres de diamètre interne et cinquante cinq millimètres de diamètre externe pour une hauteur de six millimètres.

Dans une forme de réalisation, adaptée aux machines industrielles, les plaques complémentaires (A et B) sont présentées apairées, séparées et disposées côte à côte par quatre, dans un emballage commun.

Le dispositif conforme à l'invention concerne de nombreux avantages par rapport aux solutions connues à ce jour et rappelées dans le préambule. On peut citer :
- la simplicité de fabrication à un coût réduit ;
- la simplicité de mise en oeuvre, puisque ce produit est prêt à l'emploi ;
- un excellent contrôle des nuisances vibratoires ;
- la possibilité d'être facilement réutilisé.

De la sorte, on peut l'utiliser avec succès non seulement dans toutes les applications industrielles (machines vibrantes, machines outils, presses, appareils de mesure, tables de laboratoire, etc..), mais également dans les applications domestiques les plus variées, telles que machines à laver, lave-vaisselle, congélateurs, réfrigérateurs, appareils de bricolage, chaînes haute-fidélité, pianos, etc .. .

## Revendications

1. Structure composite perfectionnée pour l'amortissement des vibrations, comprenant au moins deux plaques superposées (A et B) en matériau élastique, respectivement une plaque de dessous (A) destinée à venir au contact du sol, et une plaque de dessus (B) destinée à recevoir l'ensemble émettant les vibrations à amortir, ces plaques étant en contact mutuel par leurs faces en regard (1,10) comportant des cannelures rectilignes (2,3 ; 11,12) de profil complémentaire, les parties en saillie d'une plaque étant emboitées dans les parties en creux correspondantes de l'autre plaque, caractérisée en ce que la face externe (15) de la plaque de dessus (B) présente une bordure en relief (25) comportant au niveau de la face supérieure (15) une entaille (26) disposée dans le même plan que cette face externe (15).

2. Structure composite selon la revendication 1, caractérisée en ce que l'entaille (26) est destinée à recevoir une plaque rigide (30), sur laquelle vient s'appuyer l'ensemble émettant les vibrations.

3. Structure composite selon l'une des revendications 1 à 2, caractérisée en ce que cette plaque rigide (30) présente une partie en creux (41) ou en gorge (55) destinée à recevoir et à maintenir une roue (42) fixée à l'extrémité d'un pied de l'ensemble vibratoire.

4. Structure composite composite selon l'une des revendications 1 à 3, caractérisée en ce que la plaque rigide (30) est en métal, notamment en acier, voire en matière plastique.

5. Structure composite composite selon l'une des revendications 1 à 4, caractérisée en ce que la plaque rigide (30) présente un orifice (31) dans lequel vient se loger une tige filetée (33,51) associée à un écrou de réglage (34,54) pour la mise à niveau de l'ensemble vibratoire.

6. Structure composite selon l'une des revendications 1 à 5, caractérisée en ce que les plaques (A et B) sont en un matériau élastique de dureté Shore identiques ou différentes, comprises entre 25 et 40, de préférence voisine de 30.

7. Structure composite composite selon l'une des revendications 1 à 6, caractérisée en ce que les plaques (A,B,30) épousent la forme d'un carré et la bordure caractéristique (25) est disposée sur deux côtés contigus (20,21).

8. Structure composite composite selon l'une des revendications 1 à 7, caractérisée en ce que la face externe de la plaque de dessous (A) destinée à venir en contact du sol, comporte des parties en relief (6,7) en forme de pyramide tronquée à base rectangulaire, disposées pour partie (6) suivant des rangées parallèles aux cannelures (2,3), et pour partie (7) des rangées inclinées ou perpendiculaires par rapport à ces cannelures (2,3).

9. Structure composite composite selon l'une des revendications 1 à 8, caractérisée en ce que la face externe de dessus (15) de la plaque de dessus (B) présente une pluralité de rainures (16,17) parallèles disposées en diagonale sur lesquelles repose alors la plaque rigide (30).

10. Structure composite composite selon l'une des revendications 1 à 9, caractérisée en ce que la face externe (15) de la plaque de dessus (B) présente en son centre une alvéole en creux (18) destinée à recevoir la tête de sertissage (37) de la tige filetée (33).

## Patentansprüche

1. Verbesserte Verbundstruktur zur Dämpfung von Schwingungen, mit zumindest zwei übereinander angeordneten Platten (A und B) aus elastischem Material, und zwar einer unteren Platte (A), die dazu bestimmt ist, mit dem Boden in Berührung zu kommen, und einer oberen Platte (B), die dazu bestimmt ist, die Anordnung aufzunehmen, die die zu dämpfenden Schwingungen hervorbringt, wobei die Platten mit ihren einander gegenüberliegenden Seiten (1, 10), die geradlinige Riffelungen (2, 3; 11, 12) von komplementärem Profil aufweisen, gegenseitig in Berührung stehen, wobei die vorspringenden Abschnitte der einen Platte in die entsprechenden vertieften Abschnitte der anderen Platte eingesetzt sind, dadurch gekennzeichnet, daß die Außenseite (15) der oberen Platte (B) einen erhabenen Rand (25) aufweist, der im Bereich der Oberseite (15) eine Einkerbung (26) aufweist, die in derselben Ebene wie die Außenseite (15) angeordnet ist.

2. Verbundstruktur nach Anspruch 1, dadurch gekennzeichnet, daß die Einkerbung (26) dazu bestimmt ist, eine steife Platte (30) aufzunehmen, auf der sich die die Schwingungen hervorbringende Anordnung abstützt.

3. Verbundstruktur nach Anspruch 1 oder 2, dadurch gekennzeichnet, daß die steife Platte (30) einen vertieften Abschnitt (41) oder einen ausgekehlten Abschnitt (55) aufweist, der dazu bestimmt ist, ein Rad (42) aufzunehmen und fest zu halten, das am Ende eines Fußes der schwingenden Anordnung befestigt ist.

4. Verbundstruktur nach einem der Ansprüche 1 bis 3, dadurch gekennzeichnet, daß die steife Platte (30) aus Metall, insbesondere aus Stahl oder aus Kunststoff besteht.

5. Verbundstruktur nach einem der Ansprüche 1 bis 4, dadurch gekennzeichnet, daß die steife Platte (30) eine Öffnung (31) aufweist, in der ein mit einer Stellmutter (34, 35) in Verbindung stehender Gewindestab (33, 51) für die Nivellierung der schwingenden Anordnung gelagert ist.

6. Verbundstruktur nach einem der Ansprüche 1 bis 5, dadurch gekennzeichnet, daß die Platten (A und B) aus einem elastischen Material mit identischer oder unterschiedlicher Shore-Härte bestehen, die 25 bis 40, bevorzugt etwa 30 beträgt.

7. Verbundstruktur nach einem der Ansprüche 1 bis 6, dadurch gekennzeichnet, daß die Platten (A, B, 30) die Form eines Quadrates aufweisen, und daß der kennzeichnende Rand (25) auf zwei aneinanderstoßenden Seiten (20, 21) angeordnet ist.

8. Verbundstruktur nach einem der Ansprüche 1 bis 7, dadurch gekennzeichnet, daß die Außenseite der unteren Platte (A), die dazu bestimmt ist, mit dem Boden in Berührung zu kommen, erhabene Abschnitte (6, 7) in Form eines Pyramidenstumpfes mit rechteckiger Grundfläche aufweist, die zum Teil (6) in parallel zu den Riffelungen (2, 3) verlaufenden Reihen und zum Teil (7) in bezüglich der Riffelungen (2, 3) schräg oder senkrecht verlaufenden Reihen angeordnet sind.

9. Verbundstruktur nach einem der Ansprüche 1 bis 8, dadurch gekennzeichnet, daß die obere Außenseite (15) der oberen Platte (B) eine Vielzahl von parallelen Nuten (16, 17) aufweist, die diagonal verlaufend angeordnet sind, und auf denen dann die steife Platte (30) ruht.

10. Verbundstruktur nach einem der Ansprüche 1 bis 9, dadurch gekennzeichnet, daß die Außenseite (15) der oberen Platte (B) mittig eine vertiefte Aushöhlung (18) aufweist, die dazu bestimmt ist, den eingefaßten Kopf (37) des Gewindestabes (33) aufzunehmen.

## Claims

1. An improved composite structure for the damping of vibrations, comprising at least two superposed plates (A and B) made of a resilient material, respectively one bottom plate (A) intended to come into contact with the ground, and a top plate (B) intended to receive the unit emitting the vibrations to be damped, these plates being in mutual contact by their opposed sides (1, 10), comprising straight corrugations (2, 3; 11, 12) of a complementary profile, the projecting portions of one plate being fitted in the corresponding recessed portions of the other plate, characterized in that the external side (15) of the top plate (B) has a border (25) in relief having at the level of the top side (15) a groove (26) disposed in the same plane as this external side (15).

2. A composite structure according to claim 1, characterized in that the groove (26) is intended to receive a rigid plate (30), whereon the unit emitting the vibrations comes to bear.

3. A composite structure according to one of claims 1 to 2, characterized in that this rigid plate (30) has a hollow (41) or a bulging part (55) intended to receive and hold a wheel (42) in position which is fixed to the end of a foot of the vibrating unit.

4. A composite structure according to one of claims 1 to 3, characterized in that the rigid plate (30) is made of metal, in particular of steel, or even of a plastic material.

5. A composite structure according to one of claims 1 to 4, characterized in that the rigid plate (30) has an opening (31) in which a threaded rod (33, 51) comes to be accommodated, which is associated with an adjusting nut (34, 54) for setting the level of the vibrating unit.

6. A composite structure according to one of claims 1 to 5, characterized in that the plates (A and B) are made of a resilient material with an identical or different Shore hardness comprised between 25 and 40, preferably close to 30.

7. A composite structure according to one of claims 1 to 6, characterized in that the plates (A, B, 30) assume the shape of a square, and the characteristic border (25) is disposed on two adjacent sides (20, 21).

8. A composite structure according to one of claims 1 to 7, characterized in that the external side of the bottom plate (A), intended to come into contact with the ground, has portions in relief (6, 7) in the form of a truncated pyramid with a rectangular base, disposed as a portion (6) along rows parallel to the corrugations (2, 3) and as a portion (7) along rows that are inclined or perpendicular relative to these corrugations (2, 3).

9. A composite structure according to one of claims 1 to 8, characterized in that the external top side (15) of the top plate (B) has a plurality of parallel, diagonally disposed grooves (16, 17), whereon the rigid plate (30) then rests.

10. A composite structure according to one of claims 1 to 9, characterized in that the external side (15) of the top plate (B) has at its centre a recessed socket (18) intended to receive the crimped head (37) of the threaded rod (33).
